# DEMANDE DE BREVET EUROPEEN

(11) **EP 3 173 998 A1**
(43) Date de publication de la demande: **31.05.2017**
(21) Numéro de dépôt: 15306896.0
(22) Date de dépôt: 30.11.2015
(51) Int. Cl.: G06Q 20/40, G06Q 20/32

(54) **MÉTHODE DE PAIEMENT ET DISPOSITIF UTILISANT CETTE MÉTHODE**

(71) Demandeur: GEMALTO SA, 92190 Meudon (FR)
(72) Inventeur: LEMAIRE, François, 92190 Meudon (FR)
(74) Mandataire: Cassagne, Philippe M.J.

(57) **Abrégé**

L'invention est une méthode de paiement à l'aide d'un dispositif électronique 200 disposant d'un capteur biométrique 220, d'une interface de communication pour communiquer avec un terminal de paiement, et d'une unité de traitement 230 disposant d'informations bancaires, d'informations biométriques de référence, d'un logiciel d'authentification, et d'un ou plusieurs logiciels de paiement. Les informations bancaires et les logiciels de paiement offrent au moins deux moyens 610, 620, 630 de paiement à l'utilisateur. La méthode permet une sélection du moyen de paiement 610, 620, 630 en associant à chaque moyen de paiement un identifiant biométrique 640, 650, 660 qui lui est propre de sorte que l'authentification biométrique permette à la fois de sélectionner le moyen de paiement et de générer un cryptogramme d'autorisation de transaction avec ledit moyen de paiement.

## Description

L'invention se rapporte à une méthode de paiement ainsi qu'à un dispositif mettant en oeuvre ladite méthode.

Parmi les différents moyens de paiement, il existe des moyens de paiement électronique tel que les cartes à puce, les téléphones portables ou autre objet équivalent. Ces moyens de paiement peuvent interagir avec un lecteur avec ou sans contact ou un serveur distant afin d'effectuer un paiement. Par paiement, il faut comprendre toute authentification et/ou autorisation liée à une transaction incluant un paiement, un débit d'unité de crédit (notamment pour une application de transport), une simple authentification de la personne qui déclenchera un paiement ultérieur ou qui valide un prépaiement déjà effectué.

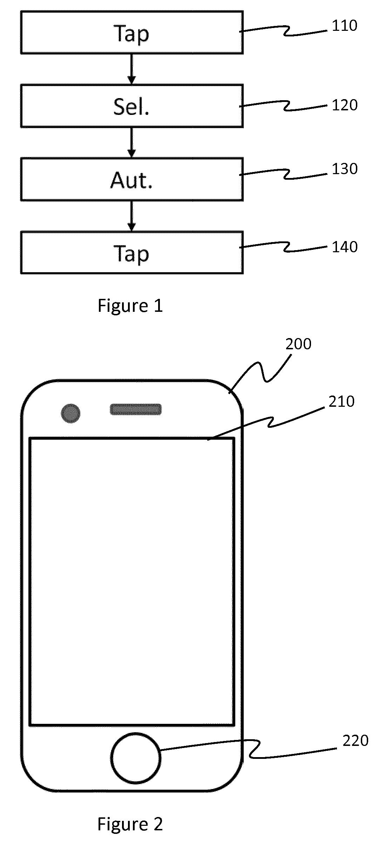

A titre d'exemple actuel, un mode de mise en oeuvre de paiement à l'aide d'un téléphone portable est indiqué sur la figure 1. Une première étape 110 consiste à mettre en contact (ou taper) le téléphone portable et le lecteur. Suite à cette étape, le lecteur transfert une requête de sélection au téléphone portable qui lance une application de sélection sur le téléphone. C'est alors que l'application de sélection laisse le choix à l'utilisateur de valider le paiement avec un moyen de paiement proposé par défaut ou de sélectionner un autre moyen de paiement au cours de l'étape 120. Cette étape 120 permet donc de sélectionner le moyen de paiement comprenant une source de paiement telle qu'un compte ou une carte ainsi qu'un type de paiement (prépayé, débit ou crédit). Une fois la sélection effectuée, l'application de paiement associée au moyen de paiement sélectionné demande à l'utilisateur de s'authentifier, étape 130. Cette étape 130 peut être réalisée de différentes manières telles que l'entrée d'un code PIN, la présentation d'une empreinte digitale, la détection d'un visage, ou autre. L'étape 130 d'authentification étant effectuée, il devient alors possible de finaliser la transaction, par exemple à l'aide d'une deuxième mise en contact du téléphone et du lecteur, dans une étape 140. Au cours de l'étape 140, le téléphone transmet les informations bancaires permettant d'effectuer la transaction accompagnées d'une signature de demande d'autorisation de paiement. Plus généralement, on parle de cryptogramme d'autorisation de transaction, communément appelé ARQC (Autorisation Request Cryptogram) selon la norme de paiement EMV.

Pour simplifier la procédure de paiement, il est connu de supprimer la première étape 110. Dans ce cas, l'utilisateur effectuera directement l'étape 120 de sélection du moyen de paiement. L'étape 130 authentifiera le porteur et la demande de transaction sera générée au niveau de l'étape 140. Une telle méthode certes plus rapide nécessite d'avoir une certaine confiance dans le lecteur car le montant n'est plus affiché sur l'écran du téléphone au moment de l'authentification mais seulement sur le lecteur.

La tendance actuelle est d'accélérer le passage en caisse et notamment le temps nécessaire au paiement. A cet effet, il est demander d'aller vers une utilisation la plus simple possible pour l'utilisateur tout en garantissant le plus de sécurité possible. L'utilisation de la biométrie est un moyen d'authentification fort d'un utilisateur tout en garantissant une grande simplicité d'utilisation pour l'utilisateur.

L'invention propose une nouvelle méthode de paiement permettant d'aller encore plus vite. Plus particulièrement l'invention est une méthode de paiement à l'aide d'un dispositif électronique disposant d'au moins un capteur biométrique, d'au moins une interface de communication pour communiquer avec un terminal externe ou distant, et d'au moins une unité de traitement disposant d'informations bancaires, d'informations biométriques de référence, au moins un logiciel d'authentification, un ou plusieurs logiciel de paiement, les informations bancaires et les logiciels de paiement offrant au moins deux moyens de paiement à l'utilisateur. La méthode permet une sélection du moyen de paiement en associant à chaque moyen de paiement un identifiant biométrique qui lui est propre de sorte que l'authentification biométrique permette à la fois de sélectionner le moyen de paiement et de générer un cryptogramme d'autorisation de transaction avec ledit moyen de paiement.

Ainsi, une étape réalisée par l'utilisateur est supprimée sans réduire le niveau de sécurité de l'autorisation de paiement.

Selon différents mode de réalisations, la sélection du moyen de paiement consiste à effectuer au moins une sélection parmi plusieurs possibilités de sélection. La sélection peut se faire parmi des informations bancaires qui correspondent à une carte bancaire parmi au moins deux cartes bancaires ou qui correspondent à un compte bancaire parmi au moins deux comptes bancaires. La sélection peut se faire parmi au moins deux types de paiement (prépayé, débit immédiat, débit différé, crédit). La sélection peut se faire parmi au moins deux logiciels de paiement distincts.

Selon un mode de réalisation, préalablement à la sélection du moyen de paiement, une requête de paiement a été reçue par le dispositif électronique avec un montant à payer et dans lequel le montant à payer est indiqué sur le dispositif d'affichage en même temps qu'une demande de sélection et d'authentification.

Préférentiellement, les identifiants biométriques sont des empreintes digitales et une empreinte digitale ne peut être utilisée que pour un moyen de paiement. Il peut être indiqué sur le dispositif d'affichage l'empreinte digitale à présenter pour chaque moyen de paiement.

Selon un autre aspect, l'invention est un dispositif électronique qui comporte au moins un capteur biométrique, au moins une interface de communication pour communiquer avec un terminal externe ou distant, et au moins une unité de traitement disposant d'informations bancaires, d'informations biométriques de référence, au moins un logiciel d'authentification, un ou plusieurs logiciel de paiement, les informations bancaires et les logiciels de paiement offrant au moins deux moyens de paiement à l'utilisateur. Chaque moyen de paiement est associé à un identifiant biométrique qui lui est propre, et le logiciel d'authentification permet une sélection du moyen de paiement simultanément à l'authentification biométrique en associant le moyen de paiement à l'empreinte biométrique présentée après avoir été authentifiée.

Préférentiellement, l'interface de communication peut être une interface radio compatible avec un terminal de paiement sans contact. L'interface de communication peut-être une interface internet. Le capteur biométrique peut être un capteur d'empreintes digitales où chaque empreinte digitale est associée à un moyen de paiement. L'unité de traitement peut comporter un circuit de traitement sécurisé résistant aux attaques afin qu'au moins une partie de l'authentification et d'une génération de cryptogramme d'autorisation de transaction soit effectuée dans ledit circuit de traitement sécurisé. Le dispositif électronique peut en outre comporter un dispositif d'affichage pour afficher un montant de transaction et un choix de moyens de paiement.

L'invention sera mieux comprise à la lecture de la description qui va suivre et qui fait référence aux figures suivantes :
la figure 1 représente un schéma de paiement électronique suivant l'invention,
les figures 2 et 3 illustrent un téléphone portable pouvant mettre en oeuvre l'invention,
La figure 4 illustre un téléphone portable dans un système de paiement, et
Les figures 5 à 7 illustrent le procédé selon l'invention.

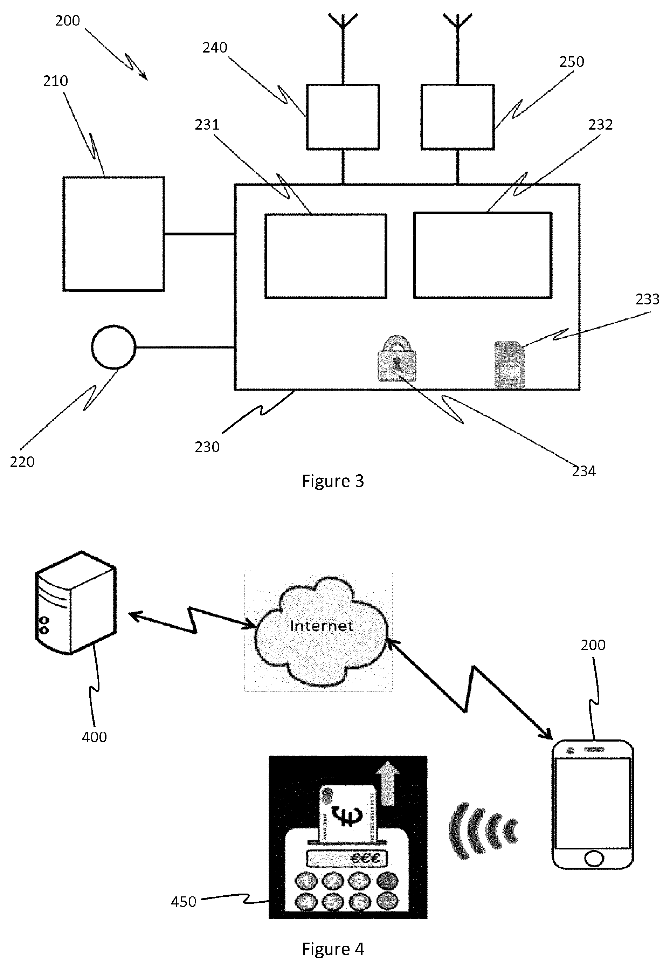

Les figures 2 et 3 représentent un téléphone portable 200 muni d'un écran tactile 210 et d'un capteur d'empreinte digitale 220 relié à une unité de traitement 230. Le téléphone 200 comporte en outre une première interface de communication 240 avec un réseau de radio télécommunication mobile et une deuxième interface radio 250 destiné à une communication de proximité.

L'unité de traitement 230 comporte un microprocesseur 231 et une mémoire 232 comprenant une partie volatile et une partie non volatile. La mémoire 232 comporte la plupart des programmes et données qui vont fonctionner sur le téléphone. L'unité de traitement 230 comporte en outre une carte SIM 233, et un circuit sécurisé 234. La carte SIM 233 comporte des informations nécessaires à l'identification du téléphone sur le réseau de radio téléphonie et également des programmes et des données qui peuvent nécessiter une certaine sécurisation telle que par exemple pour un paiement. Le circuit sécurisé 234 est typiquement un microcontrôleur résistant aux attaques, ce type de circuit est plus connu sous son nom anglais « secure element » et il est destiné à conserver toute les informations très confidentielles de l'unité de traitement et comporte en outre des programmes sensibles en lien avec ces données. Le programme d'authentification d'empreintes digitales qui permet de vérifier que l'empreinte qui est présentée au capteur 220 correspond bien à une empreinte connue réside dans ce circuit sécurisé 234. La partie sensible d'un logiciel de paiement propre au téléphone peut se situer également dans cet élément sécurisé 234.

La première interface de communication 240 est une interface de radio téléphonie compatible avec les standards permettant un transfert de données autorisant une communication via internet. La deuxième interface de communication 250 est une interface de proximité qui peut être de différents types. Comme interface de proximité, il est connue d'avoir des interfaces liées à de l'échange de données type Bluetooth ou Wifi qui permette d'échanger tout type de données. Il est également connu d'avoir une interface NFC (Near Field Communication) compatible avec des terminaux de paiement sans contact selon la norme ISO14443.

Comme connu de l'homme du métier, un téléphone 200 peut comporter une ou plusieurs applications de paiement qui peuvent être en parties exécutées soit dans le circuit sécurisé 234 soit dans la carte SIM 233 si l'on souhaite avoir un minimum de sécurisation des données bancaires. La partie exécutée dans le circuit sécurisé 234 ou la carte SIM 233 est en général lancé par un programme exécuté par le microprocesseur 231 qui envoie une commande approprié au dit circuit sécurisé 234 ou carte SIM 233 à chaque fois que ledit programme doit effectuer une opération sensible.

A titre d'exemple lorsqu'un programme en cours de traitement demande de vérifier une empreinte digitale, une capture d'empreinte est réalisée à l'aide du capteur d'empreinte digitale 220, sous contrôle d'un programme en cours d'exécution sur le microprocesseur 231. Le microprocesseur 231 va ensuite bâtir une commande de vérification d'empreinte à destination du circuit sécurisé 234 qui reçoit l'empreinte capturée ou une signature de cette empreinte. A réception de cette commande, le circuit sécurisé 234 compare cette empreinte capturée avec une ou plusieurs empreintes de référence. Si une empreinte de référence correspond à l'empreinte capturée, le circuit sécurisé 234 renvoie une réponse d'authentification positive. Dans le cas où plusieurs empreintes sont stockées, le circuit sécurisé peut aussi retourner un identifiant correspondant à l'empreinte authentifiée. La commande d'authentification de l'empreinte digitale peut aussi contenir les informations relatives à la transaction, ainsi, le message en retour de la commande d'authentification peut également contenir les informations nécessaires à la transaction incluant une signature de la transaction et/ou un message encrypté correspondant à un cryptogramme d'autorisation de transaction qui permet de valider la transaction auprès du serveur d'une banque.

Sur la figure 4, il est illustré deux types d'environnement de paiement que peut rencontrer le téléphone 200. Un premier mode de paiement est le paiement via internet dans lequel le téléphone 200 communique via un site marchant 400 auquel il est connecté via internet et le réseau de radiotéléphonie. Un deuxième mode de paiement est le paiement en boutique en utilisant un terminal de paiement bancaire 450 qui communique avec le téléphone via une communication radio de courte portée.

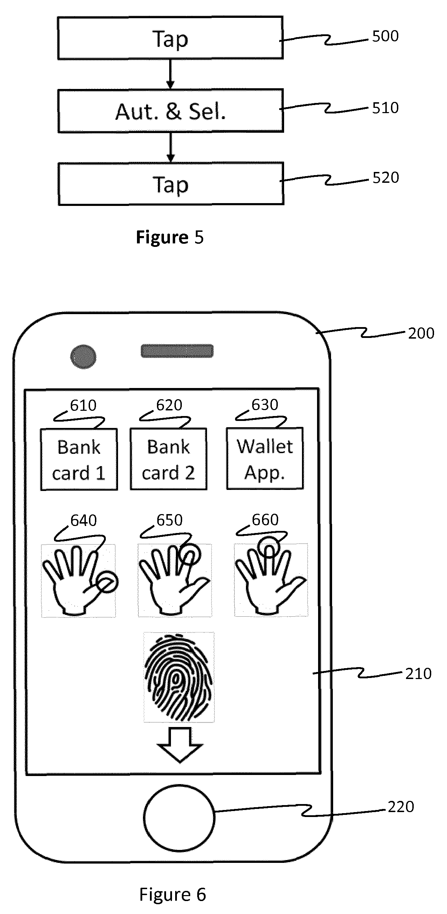

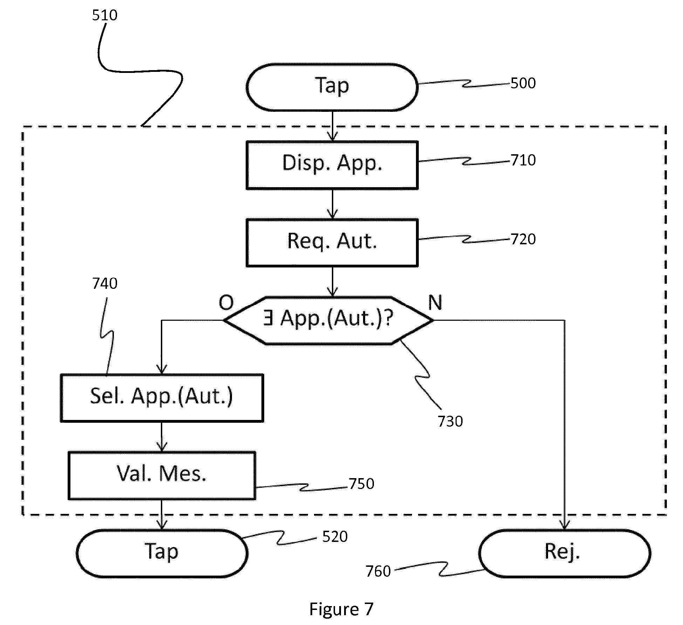

Les figures 5 à 7 montrent le fonctionnement de l'invention dans le cadre d'un paiement réalisé auprès d'un terminal de paiement 450. La figure 5 montre les étapes réalisées par l'utilisateur. La figure 6 donne un exemple de l'interface utilisateur que l'on peut utiliser. La figure 7 illustre ce qui se passe au niveau fonctionnel dans le téléphone.

Comme indiqué sur la figure 5, un utilisateur désirant effectuer un achat va « taper » son téléphone 200 contre le terminal de paiement 450 au cours d'une étape de démarrage 500. Au cours de cette étape de démarrage, le terminal de paiement 450 envoie au téléphone une requête d'autorisation de paiement. La requête reçue par le téléphone lance automatiquement une application de sélection qui demande à l'utilisateur de valider le paiement au cours d'une étape 510 d'authentification et de sélection de mode de paiement. Lors de cette étape 510, l'écran 210 affiche l'écran représenté sur la figure 6 qui demande à l'utilisateur de valider la transaction à l'aide du capteur d'empreinte 220. Optionnellement, il est possible d'afficher également le montant de la transaction pour lequel l'autorisation de paiement est demandée. Cependant, l'écran de validation propose différent mode de paiement 610 à 630 tout en indiquant un doigt 640 à 660 associé à chaque mode de paiement 610 à 630. Lorsque l'utilisateur va s'authentifier en utilisant l'un des doigts indiqués, il sélectionnera simultanément le mode de paiement associé à l'empreinte dudit doigt. L'authentification et la sélection du moyen de paiement étant simultanées, l'utilisateur n'a plus qu'à « taper » son téléphone 200 un nouvelle fois contre le terminal de paiement 450 ce qui permettra de terminer la transaction en fournissant au terminal de paiement un cryptogramme d'authentification de transaction qui comprendra, par exemple, l'identification de la transaction, du compte ou de la carte à débiter et une signature de ces informations qui permette de justifier de l'autorisation de débit.

L'homme du métier remarquera que par moyen de paiement, il faut comprendre un ensemble comprenant à la fois un logiciel de paiement et des informations bancaires sous la forme d'identifiant de carte bancaire ou d'identifiants de compte à débiter. A titre indicatif, les modes de paiement 610 et 620 peuvent correspondre à un même logiciel de paiement par émulation de carte bancaire alors que le mode de paiement 630 correspond a un logiciel de paiement par bon d'achat électronique fournit par une chaine de magasin et utilisable uniquement dans ladite chaîne de magasin.

L'homme du métier peut aussi remarquer que, sur la figure 6, les doigts sont clairement identifiés sur un dessin de la main. Pour plus de sécurité, ce type de représentation peut être remplacé par des indications de type « 1^{er} doigt », « 2^{ème} doigt », etc..., où seul l'utilisateur sait quel est le vrai doigt correspondant.

Sur le plan logiciel, il convient de se référer à la figure 7 qui détaille la réalisation de l'étape 510. Suite à la réception d'une requête de validation de paiement, une première étape 710 lance une application de sélection qui va afficher les différents moyens de paiement comme indiqué sur la figure 6, de manière optionnelle l'affichage peut aussi indiquer le montant de la transaction à effectuer. Une deuxième étape 720 demande alors à l'utilisateur de valider le paiement en s'authentifiant à l'aide du capteur biométrique 220. L'écran de la figure 6 est affiché jusqu'à réception d'une capture d'empreinte par le capteur 220.

L'utilisateur passant un doigt sur le capteur biométrique 220, une vérification 730 permet de vérifier si l'empreinte présentée au capteur biométrique correspond à une empreinte enregistrée et l'empreinte est associée à un moyen de paiement. Si un moyen de paiement correspond à l'empreinte alors une étape de sélection 740 lance l'application avec des paramètres correspondant au moyen de paiement associé à l'empreinte tout en conservant l'authentification effectuée. Ainsi, une fois la sélection effectuée, l'application de paiement peut passer directement à l'étape de validation 750 afin de construire un cryptogramme d'autorisation de transaction correspondant au moyen de paiement qui vient d'être sélectionner.

Après l'étape de validation 750, l'utilisateur n'a plus qu'à « taper » à nouveau le téléphone sur le lecteur pour transmettre le cryptogramme d'autorisation de transaction au terminal de paiement 450.

Lors de la vérification, si aucun mode de paiement n'est associé à l'empreinte ou si l'empreinte ne correspond à aucune empreinte préalablement enregistrée alors l'opération de paiement est rejetée 760, un message indique le rejet à l'utilisateur et termine l'application de sélection sans déclencher d'application de paiement.

Comme le comprendra l'homme du métier, d'autre algorithme peuvent être mis en oeuvre en mélangeant l'ordre des étapes. Ce peut être le cas si l'authentification de l'empreinte se fait dans chaque application de paiement et non pas dans l'application de sélection. La vérification peut alternativement se faire en fournissant de manière successive l'empreinte à différentes applications de paiement et la sélection s'opérera automatiquement dès lors qu'une des applications de paiement reconnaitra l'empreinte présentée. L'important est que l'utilisateur ne voit qu'une seule étape d'authentification qui serve également à sélectionner le mode de paiement. Il va de soit que l'implémentation indiquée n'est ici qu'une façon de faire parmi de nombreuses manières de mise en oeuvre.

Egalement, il est ici fait référence à une opération de paiement en deux Taps. L'homme du métier peut aussi comprendre que le premier tap peut être remplacé par une action de l'utilisateur. Dans ce cas, l'étape de validation 750 se fera en même temps que l'étape de finalisation 520. Lors du Tap 520, le lecteur envoie une commande de sélection pour effectuer une transaction identifiée. L'étape 750 peut alors se réaliser en générant le cryptogramme d'autorisation de transaction basé sur l'authentification préalablement réalisée et sur l'identification de la transaction reçue dans la commande de sélection. Une fois le cryptogramme préparé, il est automatiquement renvoyé au terminal de paiement.

Dans le cas d'une opération de paiement faite par internet, les étapes 500 et 520 sont remplacées par des interactions avec un serveur distant ou un script envoyé par un serveur distant. L'initialisation du paiement est déclenchée par l'appui de l'utilisateur sur une icône qui va déclencher une requête de paiement à destination d'une application de sélection présente sur le téléphone 200. La finalisation du paiement se fait alors naturellement à la fin de l'étape 740 sans aucune action de l'utilisateur.

L'opération de paiement se trouve donc relativement simplifiée pour l'utilisateur tout en conservant une certaine sécurisation de l'opération. Comme indiqué précédemment, la sécurisation vient notamment du fait qu'au moins les étapes sensibles sont réalisées dans un environnement sécurisé tel qu'un circuit sécurisé 234. Alternativement, il est possible d'utiliser la carte SIM comme circuit sécurisé ou encore d'utiliser un circuit sécurisé amovible qui est par exemple intégré dans une carte SD. Dans l'hypothèse où le téléphone en lui-même peut être considéré suffisamment sécurisé, le circuit sécurisé n'est pas essentiel à la réalisation de l'invention.

L'homme du métier comprendra également que la description qui a été faite en relation avec un téléphone portable intelligent peut s'appliquer sur d'autres dispositifs électroniques similaires. Ainsi, tout ce qui est décrit peut être aisément transposable sur une tablette, une montre connectée ou un ordinateur personnel plus conventionnel.

Dans le présent exemple, le capteur biométrique est un capteur d'empreintes digitales. Cependant, il est aussi possible d'utiliser de la biométrie vocale, le capteur biométrique devenant un microphone et l'empreinte pouvant se faire par reconnaissance vocale de l'utilisateur sur des mots préenregistrés comme par exemple le nom d'usage du moyen de paiement, chaque séquence correspondant à une empreinte vocale et à un moyen de paiement.

Comme indiqué précédemment, le moyen de paiement peut aussi s'appliquer à un réseau de transport. Le cryptogramme généré est principalement une authentification de l'utilisateur. Ce cryptogramme va ensuite servir soit à établir que l'utilisateur dispose d'un abonnement en cours de validité, soit débiter un compte contenant des tickets prépayés. La sélection n'est certes pas nécessaire si un seul moyen de transport est possible par contre, l'authentification et la sélection simultanée du moyen de transport devient intéressant dès lors que plusieurs application de transport sont présente sur un même téléphone.

Egalement, l'invention a été décrite en relation avec un téléphone portable mais celle-ci est applicable à d'autres dispositifs électroniques. Comme indiqué, il peut s'agir de tablette, ordinateur portable, montre intelligente ou même une carte à puce multi applicatives. Dans le cas d'une carte à puce, celle-ci devra disposer d'un capteur d'empreinte digitale mais ne pas nécessairement disposer d'un écran de visualisation, l'utilisateur devra dans ce cas avoir en mémoire l'empreinte associée au moyen de paiement ou alors la carte affichera l'équivalent de la figure 6 sur le terminal de paiement.

## Revendications

1. Méthode de paiement à l'aide d'un dispositif électronique (200) disposant de :
- au moins un capteur biométrique (220),
- au moins une interface de communication (240, 250) pour communiquer avec un terminal externe (450) ou distant (400),
- au moins une unité de traitement (230) disposant d'informations bancaires, des informations biométriques de référence, un logiciel d'authentification, un ou plusieurs logiciel de paiement, les informations bancaires et les logiciels de paiement offrant au moins deux moyens (610, 620, 630) de paiement à l'utilisateur,
**caractérisé en ce que** la méthode permet une sélection (510) du moyen de paiement (610, 620, 630) en associant à chaque moyen de paiement un identifiant biométrique (640, 650, 660) qui lui est propre de sorte que l'authentification biométrique permette à la fois de sélectionner le moyen de paiement et de générer un cryptogramme d'autorisation de transaction avec ledit moyen de paiement.

2. Méthode selon la revendication 1, dans laquelle la sélection du moyen de paiement consiste à effectuer au moins l'une des sélections suivantes :
- sélections parmi les informations bancaires d'informations qui correspondent à une carte bancaire parmi au moins deux cartes bancaires,
- sélection parmi les informations bancaires d'informations qui correspondent à un compte bancaire parmi au moins deux comptes bancaires
- sélection d'un type de paiement différent parmi au moins deux types de paiement,
- sélection d'un logiciel parmi au moins deux logiciels.

3. Méthode selon la revendication 1, dans laquelle les identifiants biométriques sont des empreintes digitales et dans laquelle une empreinte digitale ne peut être utilisée que pour un moyen de paiement.

4. Méthode selon la revendication 1, dans laquelle préalablement à la sélection du moyen de paiement, une requête de paiement a été reçue par le dispositif électronique avec un montant à payer et dans lequel le montant à payer est indiqué sur le dispositif d'affichage en même temps qu'une demande de sélection et d'authentification.

5. Méthode selon les revendications 3 et 4 dans laquelle il est indiqué sur le dispositif d'affichage l'empreinte digitale à présenter pour chaque moyen de paiement.

6. Dispositif électronique (200) qui comporte :
- au moins un capteur biométrique (220),
- au moins une interface de communication (240, 250) pour communiquer avec un terminal externe (450) ou distant (400),
- au moins une unité de traitement (230) disposant d'informations bancaires, des informations biométriques de référence, un logiciel d'authentification, un ou plusieurs logiciel de paiement, les informations bancaires et les logiciels de paiement offrant au moins deux moyens (610, 620, 630) de paiement à l'utilisateur,
**caractérisé en ce que** chaque moyen de paiement (610, 620, 630) est associé à un identifiant biométrique (640, 650, 660) qui lui est propre, et **en ce que** le logiciel d'authentification permet une sélection du moyen de paiement simultanément (510) à l'authentification biométrique en associant le moyen de paiement à l'empreinte biométrique présentée après avoir été authentifiée.

7. Dispositif électronique selon la revendication 6, dans lequel l'interface de communication est une interface radio (250) compatible avec un terminal de paiement sans contact

8. Dispositif électronique selon la revendication 6, dans lequel l'interface de communication est une interface internet (240).

9. Dispositif selon la revendication 6, dans lequel le capteur biométrique (220) est un capteur d'empreintes digitales et chaque empreinte digitale est associée à un moyen de paiement.

10. Dispositif selon la revendication 6, dans lequel l'unité de traitement comporte un circuit de traitement sécurisé (233, 234) résistant aux attaques et dans lequel au moins une partie de l'authentification et d'une génération de cryptogramme d'autorisation de transaction est effectuée dans ledit circuit de traitement sécurisé.

11. Dispositif selon la revendication 6, lequel comporte en outre un dispositif d'affichage pour afficher un montant de transaction et un choix de moyens de paiement.
